# EUROPÄISCHE PATENTANMELDUNG

(11) **EP 1 454 695 A2**
(43) Veröffentlichungstag der Anmeldung: **08.09.2004**
(21) Anmeldenummer: 04002038.0
(22) Anmeldetag: 30.01.2004
(51) Int. Cl.: B23D 29/02

(54) **Durchlaufschere**

(30) Priorität: 05.03.2003 DE 10310259
(71) Anmelder: Bessey & Sohn GmbH & Co. KG, 74321 Bietigheim-Bissingen (DE)
(72) Erfinder: Foshag, Siegfried, Dr., 73765 Neuhausen (DE)
(74) Vertreter: HOEGER, STELLRECHT & PARTNER Patentanwälte

(57) **Zusammenfassung**

Um eine Durchlaufschere, bei der die Bedienerhand beim Schneiden in einem Abstand zum Werkstück liegt, umfassend einen Scherenkopf, welcher durch einen ersten Scherenkopfschenkel mit einer ersten Schneide und einen zweiten Scherenkopfschenkel mit einer zweiten Schneide gebildet ist, ein erstes Griffteil und ein zweites Griffteil, wobei eine erste Griffteil-Scherenkopfschenkel-Kombination und eine zweite Griffteil-Scherenkopfschenkel-Kombination gebildet sind und mindestens ein Griffteil relativ zu dem Scherenkopf abgewinkelt angeordnet ist, und ein Drehlager zum Verschwenken der Griffteil-Scherenkopfschenkel-Kombinationen relativ zueinander, so zu verbessern, daß sie kostengünstig herstellbar ist und ein geringes Gewicht aufweist, ist vorgesehen, daß die Schneiden individuelle Teile sind, welche an Schneidenhaltebereichen der zugeordneten Scherenkopfschenkel fixiert sind, und daß die die Schneiden bildenden Teile beabstandet zu dem Drehlager sind.

## Beschreibung

Die Erfindung betrifft eine Durchlaufschere, bei der die Bedienerhand beim Schneiden in einem Abstand zum Werkstück liegt, umfassend einen Scherenkopf, welcher durch einen ersten Scherenkopfschenkel mit einer ersten Schneide und einen zweiten Scherenkopfschenkel mit einer zweiten Schneide gebildet ist, ein erstes Griffteil und ein zweites Griffteil, wobei eine erste Griffteil-Scherenkopfschenkel-Kombination und eine zweite Griffteil-Scherenkopfschenkel-Kombination gebildet sind und mindestens ein Griffteil relativ zu dem Scherenkopf abgewinkelt angeordnet ist, und ein Drehlager zum Verschwenken der Griffteil-Scherenkopfschenkel-Kombination relativ zueinander.

Derartige Durchlaufscheren sind beispielsweise unter der Bezeichnung "Ideal-Schere" der Bessey & Sohn GmbH & Co bekannt.

Mit einer Durchlaufschere läßt sich ein durchlaufender langer Schnitt in ein Werkstück einbringen. Durch die winklige Anordnung des oder der Griffteile relativ zu dem Scherenkopf ist dabei sichergestellt, daß die Bedienerhand die Durchlaufschere über dem Werkstück führt. Die Bedienerhand berührt dadurch nicht das Schnittgut und sperrt dadurch auch nicht dessen Weitertransport.

Weiterhin sind dadurch auch Verletzungen an scharfkantigem Schnittgut vermieden.
Mit solch einer Durchlaufschere lassen sich flächige Materialien wie Papier, Pappe oder Blechplatten schneiden.

Davon ausgehend liegt der Erfindung die Aufgabe zugrunde, eine Durchlaufschere der eingangs genannten Art so zu verbessern, daß sie kostengünstig herstellbar ist und ein geringes Gewicht aufweist.

Diese Aufgabe wird bei der eingangs genannten Durchlaufschere erfindungsgemäß dadurch gelöst, daß die Schneiden individuelle Teile sind, welche an Schneidenhaltebereichen der zugeordneten Scherenkopfschenkel fixiert sind, und daß die die Schneiden bildenden Teile beabstandet zu dem Drehlager sind.

Durch die erfindungsgemäße Lösung, bei der die Schneiden getrennt hergestellte Teile sind, die nicht an der Ausbildung des Drehlagers beteiligt sind, läßt sich die Schneidfunktion von der mechanischen Funktion bezüglich der Lagerung der Griffteil-Scherenkopfschenkel-Kombinationen aneinander trennen. Dadurch ist eine getrennte Optimierung ermöglicht. Es lassen sich so die Schneiden insbesondere aus dünnen Blechteilen herstellen, die grundsätzlich ausreichend sind für die Schneidwirkung. Die Griffteil-Scherenkopfschenkel-Kombinationen lassen sich beispielsweise aus einem Kunststoffmaterial herstellen, um so das Gewicht gering zu halten.

Es muß dann kein geschmiedeter Scherenkopf vorgesehen werden, d. h. ein Scherenkopf, bei dem die Schneiden einstückig an den Scherenkopfschenkeln gebildet sind. Bei einem geschmiedeten Scherenkopf wird der nach dem Schmieden vorhandene Verzug des Scherenkopfschenkels durch ein entsprechend großes Aufmaß an der Schneide berücksichtigt. Beim Schleifen wird das Aufmaß entsprechend abgetragen und die Schneide geschärft. Jedoch ist der Herstellungsaufwand groß und die entsprechende Durchlaufschere weist ein hohes Gewicht auf.

Dünne Blechteile, welche die Schneide bilden und ebenfalls das Gewerbe, d. h. die Gleitflächen für das Drehlager ausbilden, sind mit der für die Funktionsfähigkeit der Durchlaufschere erforderlichen Toleranz nicht herstellbar, da der Biegeprozeß zu große Toleranzen aufweist. Es müßten deshalb dicke Blechteile durch Materialabtrag (wie beispielsweise Schleifen) bearbeitet werden, um eine Durchlaufscherenfunktion bereitzustellen. Entsprechend aufwendig ist dann der Herstellungsprozeß.

Durch die erfindungsgemäße Lösung, d. h. durch die Trennung zwischen Lagerung und Schneiden, lassen sich die Anforderungen bezüglich der Lagerung und bezüglich der Schneidwirkung getrennt optimieren, wobei eine erfindungsgemäße Durchlaufschere sich kostengünstig herstellen läßt und leicht ausbilden läßt.

Insbesondere ist es vorgesehen, daß die Gleitflächen des Drehlagers (das Gewerbe) außerhalb der die Schneide bildenden Teile liegen. Dadurch läßt sich eine Trennung zwischen mechanischer Lagerung und Schneidenausbildung erreichen.

Insbesondere ist eine Gleitfläche des Drehlagers, welche an der zugeordneten Griffteil-Scherenkopfschenkel-Kombination gebildet ist, außerhalb des zugehörigen Schneidenhaltebereichs gebildet. Dadurch bilden die Schneiden selber eine Gleitflächen für das Drehlager aus. Damit wiederum ist die Herstellung vereinfacht.

Insbesondere sind die Schneiden aus Metall. Dadurch läßt sich eine gute Schneidwirkung erzielen, da insbesondere scharfe Schneidkanten herstellbar sind. Insbesondere sind dabei die Schneiden aus dünnem Blech hergestellt.

Ferner ist es günstig, wenn die Griffteile aus einem Kunststoffmaterial hergestellt sind. Aufgrund der erfindungsgemäßen Trennung zwischen Drehlagerung und Schneiden läßt sich das Griffteil so optimiert anpassen, wobei die Durchlaufschere leicht ausbildbar ist.

Aus dem gleichen Grund ist es vorteilhaft, wenn die Scherenkopfschenkel aus einem Kunststoffmaterial hergestellt sind. An den Scherenkopfschenkeln sitzen dann die metallischen Schneiden, die getrennt von der Lagerung der Griffteil-Scherenkopfschenkel-Kombinationen optimierbar sind.

Ganz besonders vorteilhaft ist es, wenn die erste Griffteil-Scherenkopfschenkel-Kombination einstückig ausgebildet ist. Insbesondere bei der Herstellung aus einem Kunststoffmaterial läßt sich dann eine solche Kombination integral beispielsweise über ein Spritzgußverfahren ausbilden. Dadurch lassen sich die Herstellungskosten verringern.

Aus dem gleichen Grund ist es vorteilhaft, wenn die zweite Griffteil-Scherenkopfschenkel-Kombination einstückig ausgebildet ist.

Günstig ist es, wenn der Scherenkopf eine oder mehrere Führungsflächen zum beabstandeten Vorbeiführen von Schnittgut an dem Drehlager aufweist. Dadurch läßt sich ein Umbiegen des Schnittguts vermeiden, um dieses an dem Drehlager vorbeizuführen. Insbesondere relativ unflexible Materialien (im Vergleich zu Papier) wie Blech oder Pappe lassen sich so schneiden und insbesondere läßt sich ein durchlaufender langer Schnitt in ein solches Werkstück einbringen.

Vorteilhaft ist es, wenn der erste Scherenkopfschenkel eine Führungsfläche für Schnittgut aufweist und ebenfalls der zweite Scherenkopfschenkel eine solche Führungsfläche aufweist.

Insbesondere sind die Führungsflächen in einer Höhenrichtung quer zur Drehachse des Drehlagers beabstandet zu diesem. Dadurch wird gewährleistet, daß Schnittgut an dem Drehlager vorbeigeführt wird, ohne das Schnittgut umbiegen zu müssen.

Ferner günstig ist es, wenn eine Führungsfläche sich in Richtung längs einer Schneidkante der zugeordneten Schneide und in einer zumindest näherungsweise parallelen Richtung zur Drehachse des Drehlagers erstreckt. Eine Führungsfläche erstreckt sich dadurch an einem Scherenkopfschenkel in einer Richtung von der zugeordneten Schneide seitlich nach außen weg, d. h. der Scherenkopf ist bezüglich der Schneide seitlich abgesetzt, um eben eine Führungsfläche bereitzustellen.

Insbesondere ragt dabei eine Schneide über die zugeordnete Führungsfläche hinaus, um einen Schnitt in das Werkstück einbringen zu können.

Um eine gute Schnittwirkung bei der erfindungsgemäßen Durchlaufschere zu erzielen, ist vorzugsweise das Drehlager in einer Verlängerung der ersten Schneide von einem distalen Ende weg angeordnet. Dadurch läßt sich eine Schneidbewegung erreichen, bei der die Durchlaufschere oberhalb des Werkstücks geführt wird und die erste Griffteil-Scherenkopfschenkel-Kombination relativ zu der zweiten Griffteil-Scherenkopfschenkel-Kombination verschwenkt wird, wobei das zweite Griffteil dann oberhalb des ersten Griffteils liegt.

Zur Lagerung weist vorzugsweise die erste Griffteil-Scherenkopfschenkel-Kombination eine Ausnehmung auf, in welcher die zweite Griffteil-Scherenkopfschenkel-Kombination drehbar angeordnet ist. Dadurch läßt sich zum einen gewährleisten, daß die Griffteile bezüglich ihrer Halteflächen fluchtend ausgerichtet sind. Zum anderen lassen sich seitlich abstehende Führungsflächen an den Scherenkopfschenkeln des Scherenkopfs ausbilden.

Eine Ausnehmung ist dann zu einer Seite hin durch den Schneidenhaltebereich des ersten Scherenkopfschenkels begrenzt. Zur anderen Seite hin ist die Ausnehmung durch das erste Griffteil begrenzt.

Durch die erfindungsgemäße Trennung zwischen mechanischer Lagerung und Schneiden ist es vorteilhafterweise möglich, mittels der Ausnehmung eine Sperrfläche bereitzustellen, über welche die Öffnungsweite des Scherenkopfs begrenzt ist. Stößt die zweite Griffteil-Scherenkopfschenkel-Kombination an diese Sperrfläche an, dann kann das Maul des Scherenkopfs nicht weiter geöffnet werden. Diese Sperrfläche läßt sich integral an der ersten Griffteil-Scherenkopfschenkel-Kombination ausbilden, ohne daß hierzu besonderer zusätzlicher Herstellungsaufwand notwendig ist.

Insbesondere ist dabei eine Tiefenrichtung der Ausnehmung parallel zur Drehachse, um so eine fluchtende Ausrichtung der Griffteile zu erreichen und um zum anderen die Führungsfläche an den Scherenkopfschenkeln ausbilden zu können.

Fertigungstechnisch günstig ist es, wenn an einer Griffteil-Scherenkopfschenkel-Kombination eine Lagerausnehmung mit einer Gleitfläche gebildet ist und an der anderen Griffteil-Scherenkopfschenkel-Kombination drehfest ein Wellenstummel mit einer zugeordneten Gleitfläche sitzt. Eine solche Lagerausnehmung und ein solcher Wellenstummel lassen sich integral an den Griffteil-Scherenkopfschenkel-Kombinationen ausbilden. Die entsprechenden Gleitflächen (das Gewerbe) lassen sich integral mitausbilden, so daß wiederum die Schneiden getrennt davon ausbildbar und herstellbar sind.

Eine erfindungsgemäße Durchlaufschere läßt sich auf einfache Weise herstellen, wenn die Schneiden über ein oder mehrere Befestigungselemente an den zugeordneten Scherenkopfschenkeln fixiert sind. Insbesondere sind dabei die Befestigungselemente Formschlußelemente, so daß die Montage auf einfache und schnelle Weise durchführbar ist.

Insbesondere sind dabei die Schneiden von ihrer Oberfläche her fixiert, indem beispielsweise versenkbare Schrauben die Schneiden an den zugeordneten Scherenkopfschenkeln halten.

Es ist vorteilhafterweise vorgesehen, daß bei der zweiten Griffteil-Scherenkopfschenkel-Kombination das zweite Griffteil oder ein mit dem zweiten Griffteil verbundenes Element im wesentlichen rechtwinklig mit dem zweiten Scherenkopfschenkel verbunden ist. Das zweite Griffteil liegt, wenn die Bedienerhand oberhalb des Werkstücks die Durchlaufschere führt, oberhalb des ersten Griffteils. Die beabstandete Positionierung der Hand zu dem Werkstück läßt sich auf einfache Weise durch die entsprechende winklige Anordnung des zweiten Griffteils bzw. eines mit diesem verbundenen Elements an dem zugeordneten Scherenkopfschenkel erreichen.

Günstig ist es, wenn zwischen den beiden Griffteil-Scherenkopfschenkel-Kombinationen eine Druckfeder angeordnet ist, welche im unbelasteten Zustand den Scherenkopf öffnet. Zum Schließen des Scherenkopfs, d. h. zum Durchführen einer Schnittbewegung, muß dann die Druckkraft dieser Druckfeder überwunden werden. Durch Nachlassen dieser Druckkraft öffnet sich dann wieder das Maul des Scherenkopfs, um im Werkstück einen weiteren Schnitt durch Vorrücken des Scherenkopfs ansetzen zu können.

Es ist ferner günstig, wenn eine Riegelvorrichtung vorgesehen ist, mittels welcher eine geschlossene Stellung des Scherenkopfs fixierbar ist. Diese geschlossene Stellung ist eine Aufbewahrungsstellung, in der die Schneidkanten der Schneiden nicht offenliegen, so daß ein Bediener vor unbeabsichtigtem Greifen in die Schneidkanten geschützt ist.

Die nachfolgende Beschreibung einer bevorzugten Ausführungsform dient im Zusammenhang mit der Zeichnung der näheren Erläuterung der Erfindung. Es zeigen:
- Figur 1: eine erste perspektivische Darstellung eines Ausführungsbeispiels einer erfindungsgemäßen Durchlaufschere;
- Figur 2: eine zweite perspektivische Ansicht der Durchlaufschere gemäß Figur 1;
- Figur 3: eine erste Griffteil-Scherenkopfschenkel-Kombination in perspektivischer Darstellung und
- Figur 4: eine zweite Griffteil-Scherenkopfschenkel-Kombination, wobei die beiden Griffteil-Scherenkopfschenkel-Kombinationen die Durchlaufschere gemäß den Figuren 1 und 2 bilden.

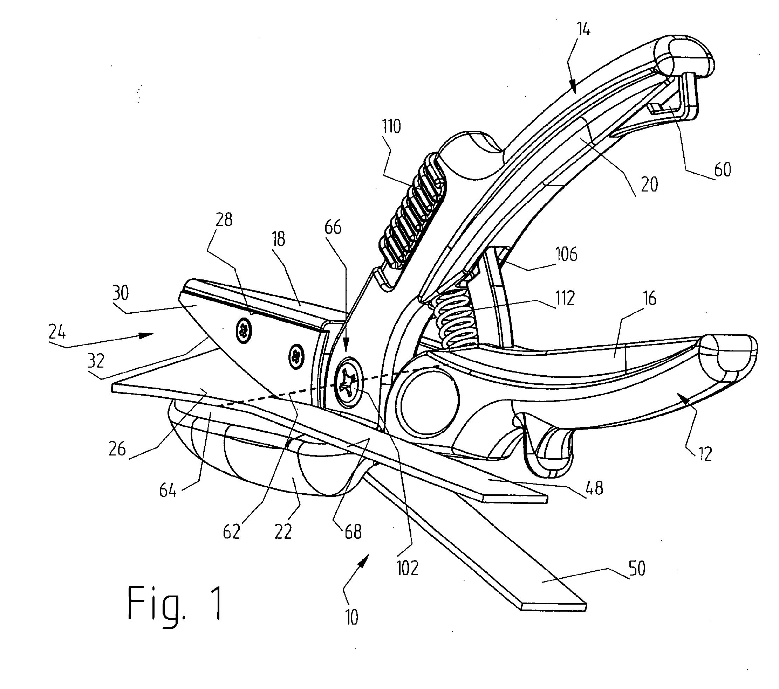

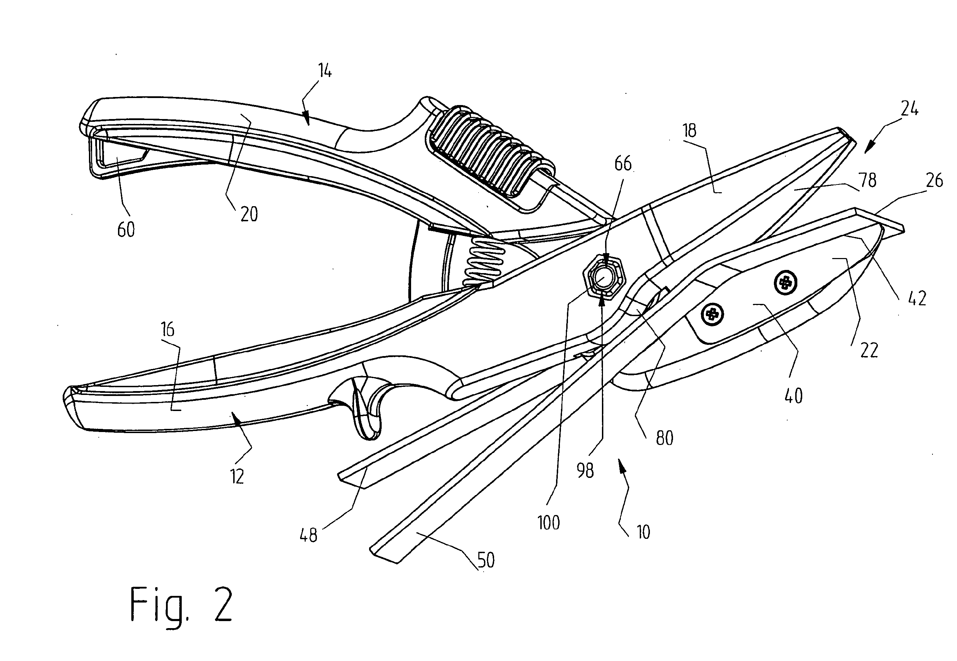

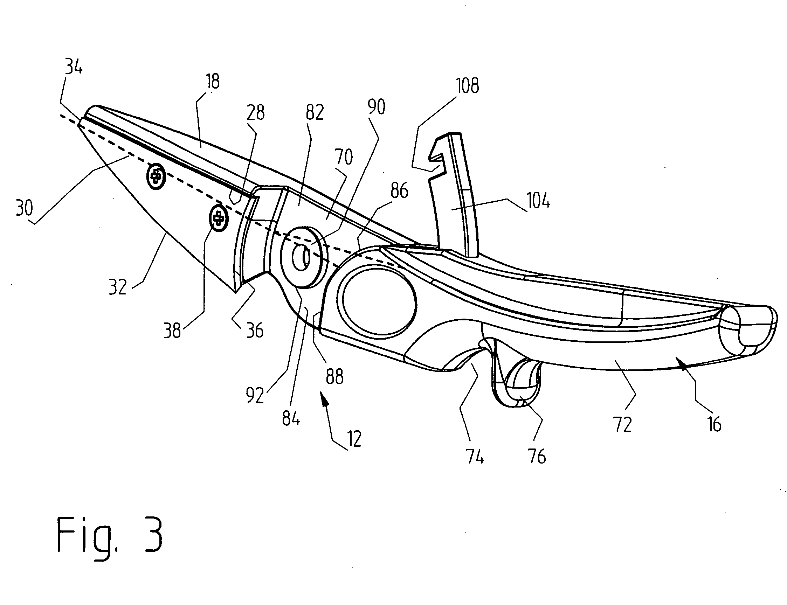

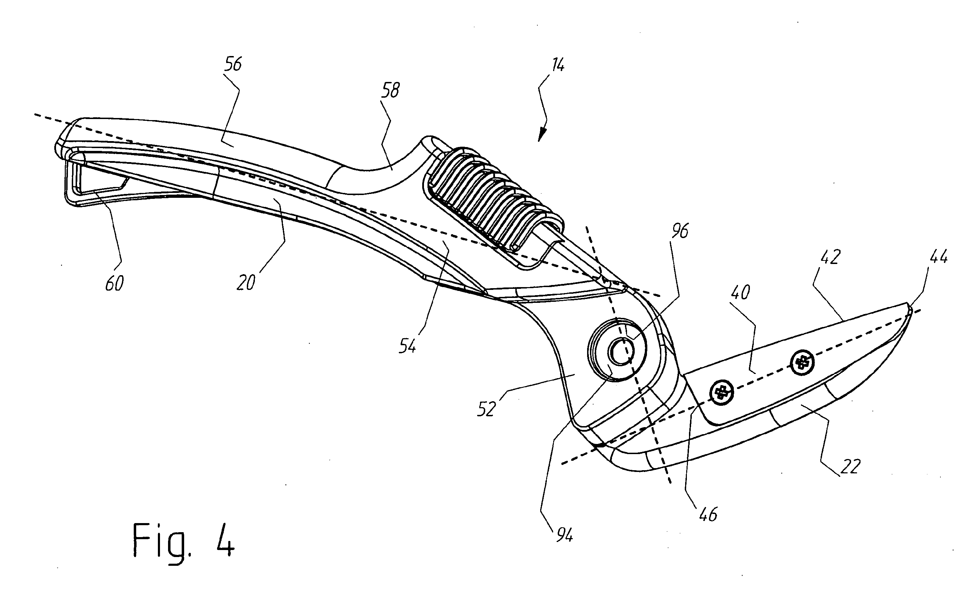

Ein Ausführungsbeispiel einer erfindungsgemäßen Durchlaufschere, welche in den Figuren 1 und 2 als Ganzes mit 10 bezeichnet ist, umfaßt eine erste Griffteil-Scherenkopfschenkel-Kombination 12 (Figur 3) und eine zweite Griffteil-Scherenkopfschenkel-Kombination 14 (Figur 4). Die erste Griffteil-Scherenkopfschenkel-Kombination 12 wiederum umfaßt ein erstes Griffteil 16 und einen ersten Scherenkopfschenkel 18. Die zweite Griffteil-Scherenkopfschenkel-Kombination 14 umfaßt ein zweites Griffteil 20 und einen zweiten Scherenkopfschenkel 22.

Die beiden Scherenkopfschenkel 18 und 22 bilden einen Scherenkopf 24, dessen Maulweite über die Verschwenkung der Griffteile 16 und 20 einstellbar ist. Durch Aufeinanderzubewegung der beiden Griffteile 16 und 20 ist in ein Werkstück 26 ein Schnitt einbringbar.

Der erste Scherenkopfschenkel 18 weist einen Schneidenhaltebereich 28 auf, an dem eine erste Schneide 30 sitzt. Die erste Schneide 30 weist dabei eine Schneidkante 32 auf. Sie ist aus einem metallischen Werkstoff hergestellt und ist insbesondere plättchenförmig ausgestaltet und erstreckt sich zwischen einer ersten Begrenzungsebene und einer zweiten Begrenzungsebene, wobei diese beiden Begrenzungsebenen im wesentlichen parallel zueinander liegen.

An einem distalen Ende 34 weist die erste Schneide 30 eine geringere Breite als an dem gegenüberliegenden Ende 36 auf. Die Schneidkante 32 verläuft zwischen diesen Enden 34 und 36 und ist gekrümmt.

Die erste Schneide 30 ist an dem zugehörigen ersten Scherenkopfschenkel 18 mittels formschlüssigen Befestigungselementen 38, bei denen es sich insbesondere um Schrauben handelt, fixiert. Die erste Schneide 30 ist ein individuelles Teil, d. h. ein von dem ersten Scherenkopfschenkel 18 getrenntes Teil, welches nachträglich an diesem über die Befestigungselemente 38 fixiert wird.

Eine zweite Schneide 40, welche an dem zweiten Scherenkopfschenkel 22 an einem entsprechenden Schneidenhaltebereich sitzt, ist auf die gleiche Weise wie die erste Schneide 30 ausgebildet. Eine Schneidkante 42 verläuft zwischen einem distalen Ende 44 und einem gegenüberliegenden Ende 46. Die zweite Schneide 40 ist ebenfalls über Befestigungselemente wie Schrauben an dem zugehörigen zweiten Scherenkopfschenkel 22 fixiert; auch die zweite Schneide 40 bildet ein individuelles Teil, welches nachträglich fixiert wird.

Die beiden Schneiden 30 und 40 sind so ausgebildet, daß sie im Bereich ihrer Schneidkanten 32 und 42 aneinander vorbeigleiten können, um einen Schnitt in das Werkstück 26 einbringen zu können.

Die beiden Schneiden 30 und 40 sind insbesondere als dünne Blechteile ausgebildet.

Die erfindungsgemäße Schere ist eine Durchlaufschere. Bei einer solchen Durchlaufschere liegt die Hand eines Bedieners, welcher die Griffteile 16 und 20 faßt, beim Schneiden oberhalb des Werkstücks 26, so daß zum einen die Bedienerhand den Durchlauf der Schere durch das Werkstück 26 nicht stört und zum anderen ein Sicherheitsabstand zu Schnittgut 48, 50 gewährleistet ist; insbesondere bei Blechteilen als zu schneidenden Werkstücken können die Schnittgüter 48, 50 scharfe Schnittkanten aufweisen, an denen Verletzungsgefahr besteht.

Zur Ausbildung einer Durchlaufschere ist das zweite Griffteil 20 in der zweiten Griffteil-Scherenkopfschenkel-Kombination 14 angewinkelt an dem zweiten Scherenkopfschenkel 22 angeordnet. Dazu umfaßt das zweite Griffteil 20 einen Übergangsbereich 52, über welchen das zweite Griffteil 20 mit dem zweiten Scherenkopfschenkel 22 verbunden ist. Dieser Übergangsbereich 52 sitzt im wesentlichen rechtwinklig zu dem zweiten Scherenkopfschenkel 22 ausgerichtet an diesem. An den Übergangsbereich 52 schließt sich ein Handgriffbereich 54 an, welcher in einem spitzen Winkel beispielsweise der Größenordnung von 45° an dem Übergangsbereich 52 sitzt.

Der Handgriffbereich 54 ist insgesamt leicht gebogen ausgebildet und weist einen ergonomisch geformten Handanlagebereich 56 an dessen Außenseite auf. Er ist mit einem Abgleitschutz 58 versehen, welcher durch eine nach außen weisende Anlagefläche gebildet ist. In diese Anlagefläche ist die Handkuhle zwischen Daumen und Zeigefinger einlegbar.

Der Handgriffbereich 54 kann an seiner dem ersten Griffteil 16 zugewandten Innenseite mit einer Öse 60 versehen sein, über die die Durchlaufschere 10 zur Verkaufspräsentation oder zur Aufbewahrung aufhängbar ist.

Die zweite Griffteil-Scherenkopfschenkel-Kombination 14 ist in einer Vorderansicht stufenförmig ausgebildet, d. h. der Übergang zwischen dem zweiten Scherenkopfschenkel 22 zu dem Übergangsbereich 52 des zweiten Griffteils 20 und der Übergang zwischen dem Übergangsbereich 52 zu dem Handgriffbereich 54 liegen auf verschiedenen Ebenen. Ferner ist eine Begrenzungsebene des Übergangsbereich 52, welche quer zu einer Drehachse 62 der beiden Griffteil-Scherenkopfschenkel-Kombinationen bei der relativen Verschwenkung zueinander liegt, beabstandet zu einer entsprechenden Begrenzungsebene des Handgriffbereichs 54.

Dadurch ist der Übergangsbereich 52 zum einen gegenüber der genannten Begrenzungsebene des Handgriffbereichs 54 zurückgesetzt. Ferner erstreckt sich der zweite Scherenkopfschenkel 22 von der Schneidkante 42 weg über die andere Begrenzungsebene des Übergangsbereichs 52 hinaus.

Der zweite Scherenkopfschenkel 22 ist dadurch bezüglich der zweiten Schneide 40 seitlich abgesetzt, wodurch eine Führungsfläche 64 (Figur 1) gebildet ist, welche sich zumindest näherungsweise in Richtung der Schneidkante 42 und zumindest näherungsweise parallel zur Drehachse 62 erstreckt. Diese Führungsfläche 64 liegt dabei unterhalb eines Drehlagers 66, mittels welchem die beiden Griffteil-Scherenkopfschenkel-Kombinationen 12 und 14 relativ zueinander verschwenkbar sind.

Die Führungsfläche 64 erstreckt sich von einem Ende des zweiten Scherenkopfschenkels 22, welcher im Bereich des distalen Endes 44 der zweiten Schneide 40 liegt, bis in den Übergangsbereich 52, an welchem der zweite Scherenkopfschenkel 22 mit dem zweiten Griffteil 20 verbunden ist. Insbesondere befindet sich auch noch direkt unterhalb des Drehlagers 66 ein Bereich 68 der Führungsfläche 64.

Die Schneidkante 42 muß mindestens bündig zu der Führungsfläche 64 sein. Im gezeigten Ausführungsbeispiel ragt die zweite Schneide 40 mit ihrer Schneidkante 42 über diese Führungsfläche 64 hinaus.

Durch die Führungsfläche 64 läßt sich Schnittgut 48 nach dem Schneiden des Werkstücks 26 an dem Drehlager 66 und insbesondere unterhalb von diesem vorbeiführen. Dadurch wird verhindert, daß Schnittgut 48 umgebogen werden muß. Insbesondere lassen sich dadurch relativ unbiegsame Materialien wie Blech oder Pappe an dem Drehlager 66 vorbeiführen, so daß ein durchlaufender langer Schnitt in das Werkstück 26 einbringbar ist.

Der zweite Scherenkopfschenkel 22 und das zweite Griffteil sind vorzugsweise aus einem Kunststoffmaterial gefertigt, um das Gewicht der erfindungsgemäßen Durchlaufschere 10 gering zu halten. Insbesondere sind sie dabei einstückig miteinander verbunden. Die zweite Griffteil-Scherenkopfschenkel-Kombination 14 kann dadurch integral beispielsweise mittels eines Spritzgußverfahrens hergestellt werden.

Die erste Griffteil-Scherenkopfschenkel-Kombination 12 weist ebenfalls einen Übergangsbereich 70 auf, welcher den ersten Scherenkopfschenkel 18 mit einem Handgriffbereich 72 des ersten Griffteils 16 verbindet.

Der Handgriffbereich 72 ist dabei an seiner Außenseite ergonomisch ausgestaltet. Er weist eine Anlegemulde 74 für den Zeigefinger des Bedieners auf. Diese Anlegemulde 74 ist zu einem proximalen Ende des ersten Griffteils 16 hin durch einen Höcker 76 begrenzt, dessen gegenüberliegende Fläche wiederum eine Anlagefläche für einen Mittelfinger des Bedieners bildet.

Das erste Griffteil 16 ist leicht gekrümmt ausgebildet. Das erste Griffteil 16 sitzt im Übergangsbereich 70 an dem ersten Scherenkopfschenkel 18 in einem kleinen spitzen Winkel, welcher beispielsweise in der Größenordnung von 25° liegt.

Auch der erste Scherenkopfschenkel 18 weist eine Führungsfläche 78 auf (Figur 2), über welche das Schnittgut 50 an dem Drehlager 66 vorbeiführbar ist. Die Führungsfläche 78 erstreckt sich dabei in einer Richtung längs der Schneidkante 32 der ersten Schneide 30 und zumindest näherungsweise parallel zur Drehachse 62. Unterhalb des Drehlagers kann diese Führungsfläche 78 einen Bereich 80 aufweisen, welcher derart gekrümmt ist, daß das Schnittgut 50 eben unterhalb des Drehlagers 66 längs dieser Führungsfläche 78 vorbeigeführt wird.

Die Schneidkante 32 muß mindestens bündig zu der Führungsfläche 78 sein. Im gezeigten Ausführungsbeispiel ragt die erste Schneide 30 mit ihrer Schneidkante 32 über diese Führungsfläche 78 hinaus.

Das erste Griffteil 16 und der erste Scherenkopfschenkel 18 sind vorzugsweise aus einem Kunststoffmaterial hergestellt, um ein niedriges Gewicht für die Durchlaufschere 10 zu erreichen. Insbesondere ist die erste Griffteil-Scherenkopfschenkel-Kombination 12 einstückig ausgebildet, wobei sich diese Kombination dann integral beispielsweise über ein Spritzgußverfahren herstellen läßt.

Das Drehlager 66 ist in dem Übergangsbereich 70 der ersten Griffteil-Scherenkopfschenkel-Kombination 12 und dem Übergangsbereich 52 der zweiten Griffteil-Scherenkopfschenkel-Kombination 14 angeordnet. Der Übergangsbereich 70 weist eine Ausnehmung 82 auf, welche zu dem ersten Scherenkopfschenkel 18 hin durch den Schneidenhaltebereich 28 begrenzt ist. Eine Tiefenrichtung dieser Ausnehmung 82 ist im wesentlichen parallel zu der Drehachse 62.

Zu der anderen Seite hin ist die Ausnehmung 82 durch eine im wesentlichen rechtwinklig über einem Ausnehmungsboden 84 ragende Wand 86 des Handgriffbereichs 72 begrenzt. Mindestens in einem unteren, dem zweiten Griffteil 20 abgewandten Bereich 88 bildet diese Anlagefläche dabei eine Sperrfläche, welche die Maulweite des Scherenkopfs 26 begrenzt, d. h. den Schwenkwinkel der beiden Griffteil-Scherenkopfschenkel-Kombinationen 12 und 14 nach oben begrenzt.

In der Ausnehmung 82 der ersten Griffteil-Scherenkopfschenkel-Kombination 12 ist mit ihrem Übergangsbereich 52 die zweite Griffteil-Scherenkopfschenkel-Kombination 14 über das Drehlager 66 schwenkbar gelagert. Die Ausnehmung 82 und der Übergangsbereich 52 bilden das Gewerbe der erfindungsgemäßen Durchlaufschere.

Zur Ausbildung des Drehlagers 66 ist dazu beispielsweise in dem Übergangsbereich 70 ein von dem Ausnehmungsboden 84 hinausragender Wellenstummel 90 gebildet, welcher eine zylindrische Gleitfläche 92 aufweist. Dieser Wellenstummel 90 sitzt drehfest an der ersten Griffteil-Scherenkopfschenkel-Kombination 12.

Die zweite Griffteil-Scherenkopfschenkel-Kombination 14 weist in ihrem Übergangsbereich 52 eine mit dem Wellenstummel korrespondierende zylindrische Ausnehmung 94 auf mit einer hohlzylindrischen Gleitfläche 96. Bei der Verdrehung der beiden Griffteil-Scherenkopfschenkel-Kombinationen 12 und 14 in dem Drehlager 66 gleiten die Gleitflächen 92 und 96 aneinander. Über eine Sicherungsvorrichtung 98 (Figur 2) wird die axiale Verschiebung der beiden Griffteil-Scherenkopfschenkel-Kombinationen 12 und 14 parallel zur Drehachse 62 gesperrt, so daß nur noch die Schwenkbewegung um die Drehachse 62 in dem Drehlager 66, d. h. die Rotationsabgleitung der Gleitflächen 92 und 96 aneinander, erlaubt ist. Die Sicherungsvorrichtung 98 umfaßt dazu beispielsweise einen Stift 100, welcher drehfest mit der ersten Griffteil-Scherenkopfschenkel-Kombination 12 verbunden ist und ein Anlageelement 102, welches drehfest an diesem Stift 100 sitzt, welches die axiale Bewegung der zweiten Griffteil-Scherenkopfschenkel-Kombination 14 sperrt, wobei die Drehung um dieses Anlageelement 102 zugelassen ist.

Der Wellenstummel 90 ist in dem Übergangsbereich 52 in einer Verlängerung der ersten Schneide 30 von dem distalen Ende 34 weg angeordnet. Die erste Schneide 30 ist beabstandet zu dem Wellenstummel 90 und damit auch beabstandet zu dem Drehlager 66.

Die Ausnehmung 94 im Übergangsbereich 52 der zweiten Griffteil-Scherenkopfschenkel-Kombination 14 ist oberhalb einer rückwärtigen Verlängerung der zweiten Schneide 40, d. h. einer Verlängerung vom distalen Ende 44 weg, angeordnet. Damit ist das Drehlager 66 auch beabstandet zu der zweiten Schneide 40 angeordnet. Insbesondere liegen die Gleitflächen 92 und 96 außerhalb der Schneidenhaltebereiche 28 und damit auch außerhalb der Schneiden 30 und 40.

An der ersten Griffteil-Scherenkopfschenkel-Kombination 12 sitzt im Handgriffbereich 72 über eine innere Oberfläche hinausragend und dem zweiten Griffteil 20 zugewandt ein Rastelement 104. Diesem Rastelement 104 zugeordnet weist das zweite Griffteil 20 eine Ausnehmung 106 auf. Über diese Ausnehmung 106 läßt sich das zweite Griffteil 20 mit dem Rastelement 104 koppeln.

Das Rastelement 104 weist dazu im Bereich seines oberen, dem zweiten Griffteil 20 zugewandten Endes eine Ausnehmung 108 auf. An dem zweiten Griffteil 20 sitzt ein Schieber 110 mit einem Sperrelement, welches in diese Ausnehmung 108 eingreifen kann. Das Rastelement 104 mit der Ausnehmung 108 ist dabei so an den Schieber 110 mit seinem Sperrelement angepaßt, daß das Sperrelement in die Ausnehmung 108 eintauchen kann, wenn das Maul des Scherenkopfs 24 geschlossen ist, d. h. wenn die Schneidkante 32 durch die entsprechende Fläche der zweiten Schneide 40 und die Schneidkante 42 die entsprechende Fläche der ersten Schneide 30 verdeckt sind. Es liegt dann eine Grundstellung der beiden Griffteil-Scherenkopfschenkel-Kombinationen 12 und 14 vor, in welcher kein Schneidvorgang durchführbar ist. Diese Grundstellung wird durch den Schieber 110 mit dem Rastelement 104, welche eine Riegelvorrichtung bilden, gesichert.

Es ist eine Druckfeder 112 vorgesehen, welche sich sowohl an dem ersten Griffteil 16 als auch an dem zweiten Griffteil 20 abstützt. Im unbelasteten Zustand drückt diese Druckfeder 112 die beiden Griffteile 16 und 20 auseinander und öffnet dadurch den Scherenkopf 24. Entgegen der Federkraft dieser Druckfeder 112 lassen sich die beiden Griffteile 16 und 20 aufeinanderzu bewegen, um so wiederum die Schneiden 30 und 40 aufeinanderzu zu bewegen.

Die erfindungsgemäße Durchlaufschere 10 funktioniert wie folgt:

Nach Aufhebung der Sicherung durch entsprechende Verschiebung des Schiebers 110 kann das Werkstück 26 geschnitten werden. Die Durchlaufschere 10 ist dabei handbetätigt, wobei ein Bediener die Handgriffbereiche 54 und 72 greift. Im Handgriffbereich 54 liegt die Kuhle zwischen Daumen und Zeigefinger an und der Handflächenbereich, welcher parallel zum Daumen zu diesem versetzt ist. In dem Handgriffbereich 72 liegen die restlichen Finger an.

Zum Schneiden des Werkstücks 26 wird dann das erste Griffteil 16 über das Drehlager 66 in Richtung des zweiten Griffteils 20 verschwenkt. Dadurch wird die Schneidkante 32 der ersten Schneide 30 auf die Schneidkante 42 der zweiten Schneide 40 zu verschwenkt und beim Schneidvorgang können die beiden Schneiden 30 und 40 aneinander abgleiten.

Durch die Ausbildung als Durchlaufschere 10 liegt die Hand oberhalb des Werkstücks 26, so daß diese nicht mit Schnittgut 48 und 50 in Berührung kommt; die Hand liegt in einem Sicherheitsabstand zu dem Schnittgut 48, 50.

Über die Führungsflächen 64 und 78 wird ferner das Schnittgut 48, 50 an dem Drehlager 66 vorbeigeführt, so daß ein Umbiegen des Schnittguts nicht erforderlich ist.

Durch die erfindungsgemäße Ausbildung der Durchlaufschere 10 ist die mechanische Funktion zur Schwenkbewegung der beiden Griffteil-Scherenkopfschenkel-Kombinationen 12 und 14 von der Schneidfunktion getrennt. Die Schneidfunktion wird durch die Schneiden 30 und 40 erreicht. Diese lassen sich als dünne metallische Plättchen ausbilden, ohne das Gewerbe oder einen Teil des Gewerbes (die Gleitflächen des Drehlagers 66) zu bilden. Diese Gleitflächen 92, 96 sind ausschließlich an den Griffteil-Scherenkopfschenkel-Kombinationen 12 und 14, und zwar in deren Übergangsbereichen 70 und 52, gebildet.

Dadurch lassen sich die Schneiden 30, 40 getrennt von den Griffteil-Scherenkopfschenkel-Kombinationen 12 und 14 herstellen. Insbesondere ist es dadurch möglich, die Griffteil-Scherenkopfschenkel-Kombinationen 12, 14 aus einem Kunststoffmaterial herzustellen, so daß sich ein niedriges Gewicht für die erfindungsgemäße Durchlaufschere 10 erreichen läßt. Durch die erfindungsgemäße Trennung zwischen Lagerung der beiden Griffteil-Scherenkopfschenkel-Kombinationen 12 und 14 und Schneidwirkung (über die Schneiden 30, 40) läßt sich die Durchlaufschere 10 auch mit kleinen Abmessungen ausbilden.

## Patentansprüche

1. Durchlaufschere, bei der die Bedienerhand beim Schneiden in einem Abstand zum Werkstück (26) liegt, umfassend einen Scherenkopf (24), welcher durch einen ersten Scherenkopfschenkel (18) mit einer ersten Schneide (30) und einen zweiten Scherenkopfschenkel (22) mit einer zweiten Schneide (40) gebildet ist, ein erstes Griffteil (16) und ein zweites Griffteil (20), wobei eine erste Griffteil-Scherenkopfschenkel-Kombination (12) und eine zweite Griffteil-Scherenkopfschenkel-Kombination (14) gebildet sind und mindestens ein Griffteil (20) relativ zu dem Scherenkopf (24) abgewinkelt angeordnet ist, und ein Drehlager (66) zum Verschwenken der Griffteil-Scherenkopfschenkel-Kombinationen (12, 14) relativ zueinander,
**dadurch gekennzeichnet , daß** die Schneiden (30, 40) individuelle Teile sind, welche an Schneidenhaltebereichen (28) der zugeordneten Scherenkopfschenkel (18, 22) fixiert sind, und daß die die Schneiden (30, 40) bildenden Teile beabstandet zu dem Drehlager (66) sind.

2. Durchlaufschere nach Anspruch 1, **dadurch gekennzeichnet, daß** die Gleitflächen (92, 96) des Drehlagers (66) außerhalb der die Schneiden (30, 40) bildenden Teile liegen.

3. Durchlaufschere nach Anspruch 1 oder 2, **dadurch gekennzeichnet, daß** eine Gleitfläche (92; 96) des Drehlagers (66), welche an der zugeordneten Griffteil-Scherenkopfschenkel-Kombination (12; 14) gebildet ist, außerhalb des zugehörigen Schneidenhaltebereichs (28) gebildet ist.

4. Durchlaufschere nach einem der vorangehenden Ansprüche, **dadurch gekennzeichnet, daß** die Schneiden (30, 40) aus Metall sind.

5. Durchlaufschere nach einem der vorangehenden Ansprüche, **dadurch gekennzeichnet, daß** die Griffteile (16, 20) aus einem Kunststoffmaterial hergestellt sind.

6. Durchlaufschere nach einem der vorangehenden Ansprüche, **dadurch gekennzeichnet, daß** die Scherenkopfschenkel (18, 22) aus einem Kunststoffmaterial hergestellt sind.

7. Durchlaufschere nach einem der vorangehenden Ansprüche, **dadurch gekennzeichnet, daß** die erste Griffteil-Scherenkopfschenkel-Kombination (12) einstückig ausgebildet ist.

8. Durchlaufschere nach einem der vorangehenden Ansprüche, **dadurch gekennzeichnet, daß** die zweite Griffteil-Scherenkopfschenkel-Kombination (14) einstückig ausgebildet ist.

9. Durchlaufschere nach einem der vorangehenden Ansprüche, **dadurch gekennzeichnet, daß** der Scherenkopf (24) eine oder mehrere Führungsflächen (64; 78) zum beabstandeten Vorbeiführen von Schnittgut (48; 50) an dem Drehlager (66) aufweist.

10. Durchlaufschere nach Anspruch 9, **dadurch gekennzeichnet, daß** der erste Scherenkopfschenkel (18) eine Führungsfläche (78) für Schnittgut (50) aufweist.

11. Durchlaufschere nach Anspruch 9 oder 10, **dadurch gekennzeichnet, daß** der zweite Scherenkopfschenkel (22) eine Führungsfläche (64) für Schnittgut (48) aufweist.

12. Durchlaufschere nach einem der Ansprüche 9 bis 11, **dadurch gekennzeichnet, daß** die Führungsfläche oder Führungsflächen (64; 78) in einer Höhenrichtung beabstandet zu dem Drehlager (66) sind.

13. Durchlaufschere nach einem der Ansprüche 9 bis 12, **dadurch gekennzeichnet, daß** eine Führungsfläche (64; 78) sich in Richtung längs einer Schneidkante (32; 42) der zugeordneten Schneide (30; 40) und in einer zumindest näherungsweise parallelen Richtung zur Drehachse (62) des Drehlagers (66) erstreckt.

14. Durchlaufschere nach einem der Ansprüche 9 bis 13, **dadurch gekennzeichnet, daß** eine Führungsfläche (64; 78) an einem Scherenkopfschenkel (18; 22) sich in einer Richtung von der zugeordneten Schneide (30; 40) seitlich nach außen weg erstreckt.

15. Durchlaufschere nach einem der Ansprüche 9 bis 14, **dadurch gekennzeichnet, daß** eine Schneide (30; 40) über die zugeordnete Führungsfläche (78; 64) hinausragt.

16. Durchlaufschere nach einem der vorangehenden Ansprüche, **dadurch gekennzeichnet, daß** das Drehlager (66) in einer Verlängerung der ersten Schneide (30) von einem distalen Ende (34) weg angeordnet ist.

17. Durchlaufschere nach einem der vorangehenden Ansprüche, **dadurch gekennzeichnet, daß** die erste Griffteil-Scherenkopfschenkel-Kombination (12) eine Ausnehmung (82) aufweist, in welcher die zweite Griffteil-Scherenkopfschenkel-Kombination (14) drehbar angeordnet ist.

18. Durchlaufschere nach Anspruch 17, **dadurch gekennzeichnet, daß** die Ausnehmung (82) zu einer Seite hin durch den Schneidenhaltebereich (28) des ersten Scherenkopfschenkels (18) begrenzt ist.

19. Durchlaufschere nach Anspruch 18, **dadurch gekennzeichnet, daß** die Ausnehmung (82) zur anderen Seite hin durch das erste Griffteil (16) begrenzt ist.

20. Durchlaufschere nach einem der Ansprüche 17 bis 19, **dadurch gekennzeichnet, daß** mittels der Ausnehmung (82) eine Sperrfläche (88) bereitgestellt ist, über welche die Öffnungsweite des Scherenkopfs (24) begrenzt ist.

21. Durchlaufschere nach einem der Ansprüche 17 bis 20, **dadurch gekennzeichnet, daß** eine Tiefenrichtung der Ausnehmung (82) parallel zur Drehachse (62) ist.

22. Durchlaufschere nach einem der vorangehenden Ansprüche, **dadurch gekennzeichnet, daß** an einer Griffteil-Scherenkopfschenkel-Kombination (14) eine Lagerausnehmung (94) mit einer Gleitfläche (96) gebildet ist und an der anderen Griffteil-Scherenkopfschenkel-Kombination (12) drehfest ein Wellenstummel (90) mit einer zugeordneten Gleitfläche (92) sitzt.

23. Durchlaufschere nach einem der vorangehenden Ansprüche, **dadurch gekennzeichnet, daß** die Schneiden (30; 40) über ein oder mehrere Befestigungselemente (38) an dem zugeordneten Scherenkopfschenkel (18; 22) fixiert sind.

24. Durchlaufschere nach Anspruch 23, **dadurch gekennzeichnet, daß** die Befestigungselement (38) Formschlußelemente sind.

25. Durchlaufschere nach Anspruch 23 oder 24, **dadurch gekennzeichnet, daß** die Schneiden (30, 40) von ihrer Oberfläche her fixiert sind.

26. Durchlaufschere nach einem der vorangehenden Ansprüche, **dadurch gekennzeichnet, daß** bei der zweiten Griffteil-Scherenkopfschenkel-Kombination (14) das zweite Griffteil (20) oder ein mit dem zweiten Griffteil (20) verbundenes Element im wesentlichen rechtwinklig mit dem zweiten Scherenkopfschenkel (22) verbunden ist.

27. Durchlaufschere nach einem der vorangehenden Ansprüche, **dadurch gekennzeichnet, daß** zwischen den beiden Griffteil-Scherenkopfschenkel-Kombinationen (12, 14) eine Druckfeder (112) angeordnet ist, welche im unbelasteten Zustand den Scherenkopf (24) öffnet.

28. Durchlaufschere nach einem der vorangehenden Ansprüche, **dadurch gekennzeichnet, daß** eine Riegelvorrichtung vorgesehen ist, mittels welcher eine geschlossene Stellung des Scherenkopfs (24) fixierbar ist.
